# DEMANDE DE BREVET EUROPEEN

(11) **EP 3 675 561 A1**
(43) Date de publication de la demande: **01.07.2020**
(21) Numéro de dépôt: 19220139.0
(22) Date de dépôt: 30.12.2019
(51) Int. Cl.: H04W 40/22, H04W 40/24, H04W 40/32

(54) **PROCÉDÉ DE ROUTAGE DYNAMIQUE DANS DES RÉSEAUX INTERCONNECTÉS D'OBJETS CONNECTÉS**

(30) Priorité: 31.12.2018 EP 18306905; 06.05.2019 FR 1904718
(71) Demandeur: Bull SAS, 78340 Les Clayes-sous-Bois (FR)
(72) Inventeur: DEMEILLIEZ, Bruno, 38380 Saint Laurent du Pont (FR); MENIGOT, Gilles, 38190 Froges (FR); CHAABANE, Wajih, 73000 Chambery (FR)
(74) Mandataire: A.P.I. Conseil

(57) **Abrégé**

Il est proposé un procédé de routage dynamique dans des réseaux interconnectés d'objets connectés. Le procédé a pour objet la génération et l'entretien, par une passerelle de connexion d'un réseau d'objets connectés, d'une liste de routage utilisée par ladite passerelle de connexion pour ses fonctions de routage. En outre, le procédé permet à une passerelle de connexion de sélectionner le chemin de transmission le plus approprié pour transmettre un message d'un objet connecté source à un objet connecté destinataire au sein d'une infrastructure réseau formée par au moins deux réseaux d'objets connectés et un réseau de transport de données qui les interconnecte.

## Description

La présente invention concerne le domaine des objets connectés et, en particulier, l'échange de données dans une infrastructure réseau comprenant des objets connectés. Elle concerne en particulier un procédé de routage dynamique dans des réseaux interconnectés d'objets connectés qui comprennent chacun plusieurs passerelles de connexion qui utilisent respectivement des interfaces de communication différentes.

### [Art antérieur]

L'internet des Objets (IdO), ou Internet of Things (loT) désigne l'ensemble des objets connectés à internet et est un domaine des Technologies de l'Information et de la Communication (ou TIC) en pleine expansion. En effet, l'IoT trouve des applications dans des domaines de plus en plus variés tels que, par exemple, la ville intelligente, les voitures autonomes, la domotique ou encore la gestion intelligente de la maison...

Les dispositifs électroniques concernés par ces applications sont appelés des objets connectés, dans le sens où ils interagissent au travers de sous-réseaux locaux qui peuvent être connectés à un réseau central à haut débit comme l'Internet. Plusieurs sous-réseaux locaux peuvent être intégrés à un même réseau d'objets connectés. Un tel réseau d'objets connectés, aussi appelé réseau local dans la suite, comprend alors plusieurs passerelles de connexion, propres à chaque sous-réseau, auxquelles sont respectivement connectés un ou plusieurs objets connectés. Chaque passerelle de connexion assure le routage de messages qui transitent, d'une part, entre les différents objets connectés du réseau local et, d'autre part, entre les objets connectés du réseau local et un réseau de transport de données (comme par exemple Internet).

En outre, plusieurs réseaux locaux peuvent être interconnectés, par l'intermédiaire d'un réseau de transport de données. Dans ce cas, les passerelles de connexion des réseaux locaux interconnectés sont connectées à des passerelles de connexion du réseau de transport de données. Des messages peuvent ainsi transiter entre des objets connectés de réseaux d'objets connectés distincts. Dit autrement, un message peut être émis par un objet connecté source d'un réseau d'objets connectés donné et transiter par plusieurs passerelles de connexion, dont au moins une passerelle de connexion d'un réseau de transport de données, jusqu'à un objet connecté destinataire d'un autre réseau d'objets connectés.

Dans une telle configuration, la passerelle de connexion à laquelle est connecté l'objet connecté source doit pouvoir assurer le routage du message à transmettre dans toute l'infrastructure réseau formée par le réseau d'objets connectés auquel appartient l'objet connecté source, le réseau de transport de données et le réseau d'objets connectés auquel appartient l'objet connecté destinataire.

Ainsi, pour réaliser cette fonction de routage de manière optimale, une passerelle de connexion doit pouvoir sélectionner le chemin de transmission le plus approprié pour un message parmi plusieurs chemins de transmission potentiels. Par exemple, la passerelle de connexion doit être en mesure de sélectionner le chemin de transmission le plus stable ou le plus rapide entre un objet connecté et un autre. En outre, cette capacité doit être dynamique dans la mesure où l'infrastructure réseau au sein de laquelle transite le message peut évoluer dans le temps. Par exemples des passerelles de connexion temporaires peuvent être ajoutées ou retirées dans chaque réseau impliqué.

Enfin, outre le fait que chaque sous-réseau peut s'appuyer sur une technologie qui lui est propre pour sa connectivité à l'internet (par exemple avec une Box ADSL, une BOX 4G, une connexion WiMax, une connexion Satellite, un téléphone portable...), chaque passerelle de connexion utilise potentiellement une ou plusieurs interfaces de communication différentes. Typiquement, les passerelles de connexion d'un réseau d'objets connectés peuvent utiliser des interfaces Ethernet, des interfaces WIFI, des interfaces Bluetooth, des interfaces RF433 ou encore des interfaces IrDA. Ainsi, l'interconnexion entre différentes passerelles de connexion suppose que chaque passerelle de connexion soit capable d'assurer ses fonctions de routage quelles que soient les différentes interfaces de communication utilisées par les différentes passerelles de connexion concernées.

La demande de brevet européen EP3425861 divulgue un procédé permettant d'opérer un routage de données entre des dispositifs formant des nœuds d'un réseau d'objets connectés. Un tel procédé vise à apporter une solution efficace pour l'optimisation de routage afin de minimiser le temps de latence de la collecte de données sans utiliser d'outils de planification de réseau complexes. Cette demande de brevet divulgue en particulier, la génération de graphiques représentatifs de la qualité de la liaison de communication pour chaque niveau dans le réseau, et d'un score pour chaque nœud de chaque niveau de réseau, afin de réaliser des listes de routages. Une passerelle de connexion désigne un nœud « concentrateur » par niveau, qui correspond au nœud dont le score est le plus élevé. D'autres caractéristiques peuvent être calculées ou prise en comptes telles que le chemin le plus court par exemple. Néanmoins un tel procédé ne permet pas de simplement générer un maillage entre objets connectés notamment dans un environnement employant des protocoles de communication hétérogènes.

### Problème technique]

L'invention a pour but de remédier aux inconvénients de l'art antérieur précités. En particulier, l'invention a pour but de proposer un procédé qui permet de générer et d'entretenir une liste de routage entre objets connectés utilisée par une passerelle de connexion pour opérer ses fonctions de routage de données. En particulier, la liste de routage permet de sélectionner en temps réel le chemin de transmission le plus approprié pour transmettre un message d'un objet connecté source à un objet connecté destinataire. En outre, le procédé s'applique à une passerelle de connexion comprise dans une infrastructure réseau formée par au moins deux réseaux d'objets connectés et un réseau de transport de données qui les interconnecte. Enfin, le procédé s'applique aussi dans une infrastructure réseau qui comprend une pluralité de passerelles de connexion qui utilisent potentiellement différentes interfaces de communication.

### [Brève description de l'invention]

A cet effet, un premier aspect de l'invention propose un procédé de routage dynamique dans des réseaux interconnectés d'objets connectés, chaque réseau d'objets connectés comprenant au moins une passerelle de connexion à au moins un réseau de transport de données, lesdits réseaux d'objets connectés étant interconnectés par l'intermédiaire dudit réseau de transport de données, ledit procédé comprenant les étapes suivantes, exécutées par une première passerelle de connexion d'un réseau d'objets connectés local :
- une transmission, par la première passerelle de connexion, à une deuxième passerelle de connexion, d'une liste d'identifiants uniques d'objets connectés avec lesquels les objets connectés locaux sont susceptibles de communiquer,
- une réception, par la première passerelle de connexion, d'un premier message de routage provenant de la deuxième passerelle de connexion, ledit premier message de routage comportant une liste des identifiants d'objets connectés avec lesquels les objets locaux sont susceptibles de communiquer et pour lesquels la deuxième passerelle de connexion possède un chemin de transmission,
- une génération d'une liste de routage comprenant des informations d'identification respectivement associées à des objets connectés locaux connectés à la première passerelle de connexion et des informations d'identification et d'accessibilité respectivement associées à au moins une deuxième passerelle de connexion du réseau d'objets connectés local et/ou d'un réseau d'objets connectés distant accessible par ladite première passerelle de connexion ;
et, lors de la réception par la première passerelle de connexion d'un message à transmettre d'un objet connecté source à un objet connecté destinataire :
- une sélection d'un chemin de transmission du message à transmettre sur la base des informations d'identification et/ou des informations d'identification et d'accessibilité comprises dans la liste de routage.

Un tel procédé permet d'obtenir d'une pluralité de passerelles de connexion, locales ou distantes, qui utilisent potentiellement différentes interfaces de communication, une liste des objets connectés, avec lesquels les objets locaux sont susceptibles de communiquer, accessibles via chacune de ces passerelles. Ainsi, la première passerelle de connexion peut générer et d'entretenir une liste de routage entre objets connectés qui sera utilisée pour opérer des fonctions de routage de données.

Ce procédé est particulièrement utile dans un environnement comportant plusieurs passerelles de connexion entre objets connectés présentant des protocoles de communication hétérogènes et dont la disponibilité ou les caractéristiques de connectivités peuvent évoluer dans le temps. Ainsi, grâce à un tel procédé, il est possible de faire communiquer des objets en utilisant des protocoles de communications hétérogènes dont certains ne sont pas disponibles directement par l'objet connecté. Exemple un capteur (température, baromètre...) qui communique uniquement en RTL433 avec un ordinateur pourra être en communication avec un téléphone étant lui relié au réseau wifi en passant par une passerelle de type box wifi qui relie l'ordinateur et le téléphone. En particulier, la présente invention propose un mécanisme permettant à des objets connectés d'utiliser les différentes technologies de communication (wifi, réseau filaire, Bluetooth, IR...) des autres objets connectés avec lesquels ils sont connectés directement (latence=0) pour dialoguer avec les objets connectés, connectés à ces premiers objets connectés et ainsi de suite. Cela permet donc de relier des objets connectés entre eux en mixant les technologies de communication.

De plus, de façon à assurer une transmission de message entre un objet connecté et un dispositif distant (comme un autre objet connecté) au sein d'un réseau de technologies de communication hétérogènes, il est souhaitable de pouvoir disposer d'un mécanisme de routage dynamique pouvant fournir, à l'objet connecté souhaitant envoyer un message, le chemin le plus efficace vers le dispositif destinataire et cela au travers de divers protocoles de communication.

Ainsi, un des intérêts de l'invention est de permettre à des objets utilisant des protocoles hétérogènes et qui de ce fait ne peuvent normalement pas dialoguer entre eux, de le faire. Le mécanisme permet d'identifier de façon unique les différents objets connectés présent dans le ou les sous réseau et de pouvoir router des messages malgré le fait que les objets connectés utilisent des protocoles de communications différents. En effet, le procédé selon l'invention permet d'obtenir, de la part des passerelles distantes, la liste des identifiants accessibles via cette passerelle et cela via une transmission d'identifiants uniques par une deuxième passerelle de connexion correspondant aux identifiants uniques d'objets connectés avec lesquels les objets locaux sont susceptibles de communiquer et dont la deuxième passerelle est apte à atteindre.

Selon d'autres caractéristiques optionnelles du procédé :
- la première passerelle envoie une liste concaténée des identifiants des objets connectés avec lesquels les objets locaux sont susceptibles de communiquer, et la deuxième passerelle, distante ou locale, retourne un sous-ensemble contenant les identifiants pour lesquels elle possède un routage. Cela permet de borner la taille de la liste de routage étant donné qu'elle se limite aux identifiants pour lesquels elle possède un routage d'une part et seulement ceux avec lesquels les objets locaux sont susceptibles de communiquer d'autre part.
- il comporte une étape de propagation de la liste d'identifiants uniques d'objets connectés avec lesquels les objets connectés locaux sont susceptibles de communiquer de passerelle en passerelle. De façon préférée, la liste propagée comporte un indicateur du nombre de saut encore autorisé qui est réduit à chaque transmission. Ainsi, une limite est fixée au nombre de sauts de passerelle en passerelle que peut supporter le procédé selon l'invention. Ainsi, seuls sont transmis les identifiants utiles, c'est-à-dire ceux n'étant pas trop éloigné.
- Le premier message de routage provenant de la deuxième passerelle de connexion, comporte une liste des identifiants d'objets connectés directement connectés à la deuxième passerelle de connexion et il comporte une étape de réception par la première passerelle de connexion d'un deuxième message de routage provenant de la deuxième passerelle de connexion, ledit deuxième message de routage comportant une liste des identifiants d'objets connectés avec lesquels les objets locaux sont susceptibles de communiquer et pour lesquels elle possède un chemin de transmission mettant en oeuvre une autre passerelle de connexion distante.
- Les identifiants uniques d'objets connectés sont paramétrés de façon à pouvoir identifier de façons uniques, dans le ou les sous réseau, les objets connectés reliés via des protocoles de communication différents. Ainsi, il est possible de faire communiquer des objets connectés ne disposant pas forcément du même type de mécanisme de communication (Ethernet, des interfaces WIFI, des interfaces Bluetooth, des interfaces RF433 ou des interfaces IrDA). En particulier, la première passerelle de connexion utilise un protocole de communication différent de celui de la seconde passerelle.
- Le message de routage comporte en particulier, une liste d'identifiants universels uniques, UUID, comprenant des UUID d'objets connectés locaux associés à :
   - des UUID d'objets connectés distants directement connectés à la deuxième passerelle de connexion ;
   - des UUID d'objets connectés distants connectés à la deuxième passerelle de connexion par l'intermédiaire d'autres passerelles de connexion ; ou
   - des UUID d'objets connectés distants avec lesquels les objets connectés directement connectés avec la deuxième passerelle de connexion sont aptes à établir une liaison de communication.
   Ainsi, Ces listes contiennent des identifiants présents dans les listes des objets connectés locaux et leur présence associée à des UUID d'objets connectés distants signifie qu'un chemin a été trouvé pour communiquer avec ces objets connectés distants. De façon préférée, la liste de routage comporte également des données sur le chemin de transmission permettant de relier un des objets connectés locaux à une des objets connectés distants.
- Le procédé comporte en outre une suppression, sur la base d'un critère de performance déterminé, d'informations d'identification et/ou d'information d'identification et d'accessibilité redondantes au sein de la liste de routage de manière à ne conserver qu'un exemplaire unique de chacune desdites informations dans la liste de routage ;

Dans un mode de mise en œuvre, le procédé comprend en outre l'envoi, par la première passerelle de connexion du message à transmettre, à l'objet connecté destinataire, par le chemin de transmission sélectionné.

Dans un mode de mise en œuvre, les informations d'identifications associées à un objet connecté déterminé comprennent une ou plusieurs des informations suivantes :
- le type d'interface de communication supporté par la première passerelle de connexion pour la connexion avec ledit objet connecté ;
- le nom de l'interface de communication supportée par la première passerelle de connexion pour la connexion avec ledit objet connecté ;
- l'adresse dudit objet connecté sur l'interface de communication supportée par la première passerelle de connexion pour la connexion avec ledit objet connecté ;
- l'identifiant universel unique, UUID, dudit objet connecté ; et,
- une liste d'identifiants universels uniques d'autres objets connectés avec lesquels ledit objet connecté est apte à établir une liaison de communication.

Dans un mode de mise en œuvre, les informations d'identification et d'accessibilité associées à une seconde passerelle de connexion déterminée du réseau d'objets connectés local ou d'un réseau d'objets connectés distant accessible comprennent une ou plusieurs des informations suivantes :
- le type d'interface de communication supportée par la première passerelle de connexion pour la connexion avec ladite seconde passerelle de connexion ;
- le nom de l'interface de communication supportée par la première passerelle de connexion pour la connexion avec ladite seconde passerelle de connexion ;
- l'adresse de ladite passerelle de connexion sur l'interface de communication supportée par la première passerelle de connexion pour la connexion avec ladite seconde passerelle de connexion ;

Dans un mode de mise en œuvre, la liste d'identifiants universels uniques est obtenue par concaténation de tous les identifiants universels uniques compris dans ladite liste.

Dans un mode de mise en œuvre, les passerelles de connexion supportent des interfaces de communication respectives et les interfaces de communication utilisées par les passerelles de connexion comprennent des interfaces Ethernet, des interfaces WIFI, des interfaces Bluetooth, des interfaces RF433 ou des interfaces IrDA.

Dans un mode de mise en œuvre, le critère de performance déterminé est basé sur un ou plusieurs des paramètres suivants :
- la latence associée à une transmission de données de la première passerelle de connexion à un objet connecté ou à une autre passerelle de connexion ; et,
- la distance séparant la première passerelle de connexion d'un objet connecté ou d'une autre passerelle de connexion.

Dans un mode de mise en œuvre, les informations d'identifications associées à un objet connecté et les informations d'identification et d'accessibilité associées à une passerelle de connexion comprennent en outre une valeur représentative de la latence associée à une transmission de données de la première passerelle de connexion audit objet connecté ou à ladite passerelle de connexion, respectivement.

Dans un mode de mise en œuvre, les informations d'identifications associées à un objet connecté et les informations d'identification et d'accessibilité associées à une passerelle de connexion comprennent en outre une valeur représentative de la distance séparant la première passerelle de connexion dudit objet connecté ou de ladite passerelle de connexion, respectivement.

Dans un mode de mise en œuvre, la liste de routage est stockée dans une mémoire de la première passerelle de connexion et mise à jour à réception, par la première passerelle de connexion, d'un message comprenant des informations d'identification ou des informations d'identification et d'accessibilité en provenance d'un objet connecté ou d'une autre passerelle de connexion, respectivement.

Selon un deuxième aspect, l'invention porte sur une passerelle de connexion d'un réseau d'objets connectés, ledit réseau d'objets connectés étant interconnecté à un autre réseau d'objets connectés par l'intermédiaire d'au moins un réseau de transport de données et comprenant des passerelles de connexion supportant des interfaces de communication respectives, ladite passerelle de connexion étant caractérisée en ce qu'elle comporte :
- un module de communication configuré pour transmettre à une deuxième passerelle de connexion, une liste d'identifiants uniques d'objets connectés avec lesquels les objets connectés locaux sont susceptibles de communiquer, et recevoir un premier message de routage provenant de la deuxième passerelle de connexion, ledit message de routage comportant une liste des identifiants d'objets connectés avec lesquels les objets connectés locaux sont susceptibles de communiquer et pour lesquels elle possède un chemin de transmission ; et
- un module de génération configuré pour permettre à la passerelle de connexion de générer une liste de routage qui comprend des informations d'identification associées à des objets connectés et des informations d'identification et d'accessibilité associées à des passerelles de connexion ;
- un module de sélection configuré pour sélectionner un chemin de transmission lorsque la passerelle de connexion reçoit un message à transmettre d'un objet connecté source à un objet connecté destinataire du réseau d'objets connectés, ladite sélection étant réalisée sur la base de la liste de routage.

La passerelle de connexion selon l'invention peut en outre comporter un module de suppression configuré pour supprimer des informations d'identification et/ou des informations d'identification et d'accessibilité redondantes au sein de la liste de routage de manière à ne conserver qu'un exemplaire unique de chacune desdites informations dans la liste de routage.

Selon un troisième aspect, l'invention porte sur un système de communication de données comprenant au moins deux réseaux d'objets connectés interconnectés par l'intermédiaire d'un réseau de transport de données, lesdits réseaux d'objets connectés comprenant une pluralité de passerelles de connexion supportant des interfaces de communication respectives, dans le système selon l'invention chaque passerelle de connexion est configurée pour transmettre à une première passerelle de connexion des messages de routage comportant une liste des identifiants d'objets connectés avec lesquels les objets connectés locaux de la première passerelle de connexion sont susceptibles de communiquer et pour lesquels elle possède un chemin de transmission, pour générer une liste de routage qui comprend des informations d'identification associées à des objets connectés et des informations d'identification et d'accessibilité associées à des passerelles de connexion, et pour sélectionner, sur la base de la liste de routage, un chemin de transmission lorsque la passerelle de connexion reçoit un message à transmettre d'un objet connecté source à un objet connecté destinataire du réseau d'objets connectés.

D'autres caractéristiques et avantages de l'invention apparaîtront à la lecture de la description suivante donnée à titre d'exemple illustratif et non limitatif, en référence aux figures des dessins annexés dans lesquels :
**[****Fig. 1****]** est une représentation schématique d'un mode de réalisation d'un réseau d'objets connectés au sein duquel le procédé selon l'invention peut être réalisé ; et,
**[****Fig. 2****]** est un diagramme d'étape d'un mode de mise en œuvre du procédé selon l'invention.
**[****Fig. 3****]** est un schéma fonctionnel d'un mode de réalisation d'une passerelle de connexion selon l'invention.

Des aspects de la présente invention sont décrits en référence à des organigrammes et / ou à des schémas fonctionnels de procédés, d'appareils (systèmes) selon des modes de réalisation de l'invention.

Sur les figures, les organigrammes et les schémas fonctionnels illustrent l'architecture, la fonctionnalité et le fonctionnement d'implémentations possibles de systèmes et de procédés selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

### [Description de l'invention]

Dans la suite de la description, un « objet connecté » est un objet électronique connecté, par une connexion filaire ou sans fil, à un réseau de transport de données, de manière que l'objet connecté peut partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des appareils domotiques, des dispositifs d'éclairage intelligents, des enceintes connectées ou encore des smartphones.

On entend par « passerelle » ou « passerelle de connexion » au sens de l'invention un équipement assurant la connexion entre des équipements appartenant à des réseaux ou sous-réseaux locaux différents, par exemple assurant la connexion entre des équipements d'un réseau d'objets connectés (adresses IP locales) et des services internet (adresses IP publiques). De ce fait, une telle passerelle possède deux types d'adresses IP. Son adresse IP publique, attribuée par le FAI, lui permet d'échanger les données avec le réseau Internet. Son adresse IP locale lui permet d'échanger des données avec les équipements de son sous-réseau local. Elle est généralement spécifique et attribuée par défaut par le FAI.

L'expression « sous-réseau » ou « réseau local » au sens de l'invention correspond par exemple à des réseaux locaux servis chacun par au moins une passerelle de connexion à un autre réseau tel qu'Internet et auxquels sont connectés des objets connectés.

Par l'expression « directement connectée » on désigne une connexion d'un objet connecté à la passerelle de connexion qui ne passe par aucune entité intermédiaire quelle qu'elle soit.

Au sens de l'invention « message » ou « message à transmettre » correspond à un message envoyé entre des objets connectés au travers d'au moins une passerelle ou entre objet connecté et passerelle ou encore entre passerelles et comprenant des données pouvant inclure des informations relatives à leur état et à celui de leur environnement. Le format de ces données peut par exemple correspondre à des fichiers, à des flux média (vidéo, son) ou encore à des valeurs codées.

L'expression « chemin de transmission » désigne au sens de l'invention, l'ensemble des passerelles de connexion par lesquelles un message émis par un objet connecté source doit transiter, successivement, pour atteindre l'objet connecté destinataire.

Au sens de l'invention « liste» correspond à une pluralité de donnée permettant d'indiquer une information spécifique notamment en lien avec des informations d'identification et/ou d'accessibilité.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable. Un seul processeur ou plusieurs autres unités peuvent être utilisées pour mettre en œuvre l'invention.

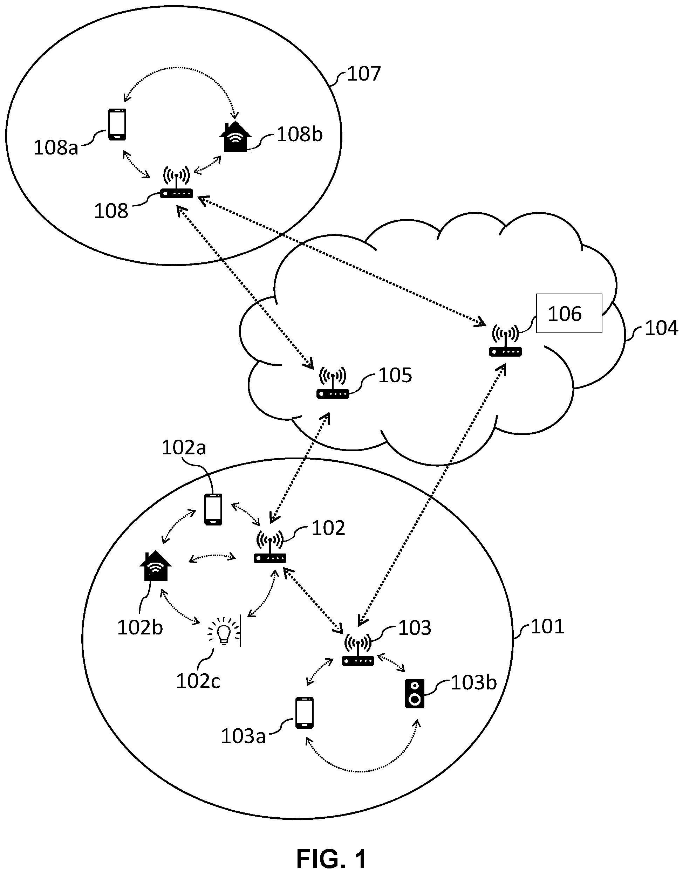

En référence au schéma de **la** **figure 1**, il va tout d'abord être décrit un mode de réalisation de réseaux interconnectés d'objets connectés dans lequel le procédé peut être mis en œuvre.

Dans l'exemple représenté à la figure 1, les réseaux d'objets connectés 101 et 107 permettent chacun de connecter les différents objets connectés qu'ils comprennent au réseau de transport de données 104, par exemple à l'Internet, par l'intermédiaire de leurs passerelles de connexion 102, 103 et 108, respectivement. En particulier, les passerelles de connexion 102, 103 et 108 sont adaptées pour établir une connexion avec une passerelle de connexion du réseau de transport de données 104. Cette connexion peut, par exemple, utiliser une technologie filaire, comme la technologie Ethernet, ou une technologie sans fil, comme la technologie 4G ou la technologie WiMax. Dans l'exemple représenté, les passerelles de connexion 102 et 108 établissent une liaison de communication avec la passerelle de connexion 105 alors que la passerelle de connexion 103 établit une liaison de communication avec la passerelle de connexion 106 du réseau de transport de données 104.

Chacune des trois passerelles de connexion 102, 103 et 108 est directement connectée à une pluralité d'objets connectés du réseau d'objets connectés auquel elle appartient. En particulier, la passerelle de connexion 102 est directement connectée avec les objets connectés 102a, 102b et 102c, la passerelle de connexion 103 est directement connectée avec les objets connectés 103a et 103b et la passerelle de connexion 108 est directement connectée avec les objets connectés 108a et 108b.

En outre, l'homme du métier appréciera que les différents objets connectés qui sont directement connectés à une passerelle de connexion sont, de fait, également connectés entre eux via ladite passerelle de connexion. Enfin, chaque objet connecté est susceptible d'établir d'autres connexions, c'est-à-dire d'autres liaisons de communication, avec d'autres objets connectés qui ne sont pas directement connectés à la même passerelle de connexion. Dit autrement, un objet connecté peut alors être connecté à une passerelle de connexion sans être directement connecté à ladite passerelle. En effet, dans ce cas, il est connecté par l'intermédiaire de la passerelle de connexion à laquelle il est directement connecté, laquelle étant quant à elle connectée, directement ou non, à ladite passerelle de connexion.

De manière générale, dans des réseaux d'objets connectés, chaque passerelle de connexion utilise une ou plusieurs interfaces de communication qui lui sont propres pour communiquer avec les objets connectés qui lui sont directement connectés. Il peut, par exemple, s'agir d'une interface Ethernet, d'une interface WIFI, d'une interface Bluetooth, d'une interface RF433 ou encore d'une interface IrDA. L'homme du métier appréciera que les modes de réalisation d'une passerelle de connexion dans laquelle l'invention peut être mise en oeuvre ne sont limités ni par le nombre ni par le type ou la nature des interfaces de connexion qui sont supportées. Dans tous les cas, un avantage du procédé selon des modes de mise en oeuvre repose notamment sur le fait que ledit procédé s'applique dans des réseaux interconnectés d'objets connectés qui peuvent comprendre plusieurs passerelles de connexions qui utilisent différentes interfaces de communication.

En résumé, les passerelles de connexion 102,103 et 108 des réseaux d'objets connectés 101 et 107 assurent le routage de données, et en particulier de messages, entre les différents objets connectés de l'infrastructure réseau globale formée par les deux réseaux d'objets connectés 101 et 107 et le réseau de transport de données 104. Les deux réseaux d'objets connectés 101 et 107 sont ainsi interconnectés par l'intermédiaire du réseau de transport de données 104. En outre, ces passerelles de connexion sont aussi adaptées pour assurer le routage de messages, par leur intermédiaire, d'un objet connecté source qui leur est connecté, directement ou non, à un objet connecté destinataire qui est connecté à une autre passerelle de connexion de l'infrastructure réseau. Ainsi, dans l'exemple présenté à la figure 1, la passerelle de connexion 102 assure le routage des messages échangés avec le réseau de transport de données 104 et, le cas échéant, avec un objet connecté qui est connecté à la passerelle de connexion 103 ou à la passerelle de connexion 108.

L'homme du métier appréciera que l'exemple décrit en référence à la figure 1 n'est pas limitatif. En particulier, des mises en œuvre du procédé peuvent s'appliquer à une infrastructure réseau formée d'un nombre de réseau d'objets connectés supérieur à deux et d'un nombre de réseaux de transport de données supérieur à 1. En outre, chaque passerelle de connexion peut être connectée, directement ou indirectement, avec un ou plusieurs objets connectés sans limite de nombre de passerelles de connexion par l'intermédiaire desquelles des messages peuvent être transmis jusqu'à un objet connecté destinataire au sein du même réseau d'objets connectés ou d'un autre réseau d'objets connectés.

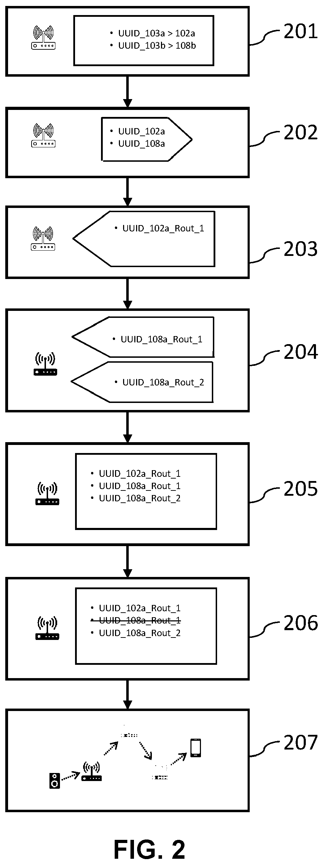

En référence à la **figure 2****,** il va maintenant être décrit un diagramme d'étapes d'un mode de mise en œuvre du procédé. L'homme du métier appréciera que le procédé peut s'exécuter de manière continue, et ainsi permettre la gestion dynamique des paramètres de routage d'une passerelle de connexion. Un tel procédé dynamique permet, par exemple, de s'adapter en temps réel à l'ajout ou au retrait d'une nouvelle passerelle de connexion au sein du réseau d'objets connectés. En outre, un tel procédé permet, par exemple, de générer et d'entretenir une liste de routage utilisée par une passerelle de connexion pour opérer ses fonctions de routage de données. De plus, un tel procédé, permet également de sélectionner en temps réel le chemin de transmission le plus approprié pour transmettre un message.

En outre, le procédé est exécuté par une passerelle de connexion d'un réseau d'objets connectés appelé réseau d'objets connectés local. Le terme « local » est employé par opposition au terme « distant » qui désigne un autre réseau d'objets connectés auquel la passerelle de connexion qui exécute les étapes du procédé n'appartient pas mais qui est cependant interconnecté au réseau d'objets connectés local par l'intermédiaire d'un réseau de transport de données. Par exemple, dans le mode de réalisation non-limitatif représenté à la figure 1, si le procédé est exécuté par la passerelle de connexion 102 ou 103, le réseau d'objets connectés local est le réseau 101 et le réseau d'objets connectés distant est le réseau 107. Inversement, si le procédé est exécuté par la passerelle de connexion 108, le réseau d'objets connectés local est le réseau 107 et le réseau d'objets connectés distant est le réseau 101.

La première étape du procédé consiste, pour une première passerelle 103 de connexion du réseau d'objets connectés local, en **l'étape 201 de génération d'une liste d'objets connectés locaux** qui comprend des informations d'identification associées à chaque objet connecté du réseau d'objets connectés local qui est connecté à cette passerelle de connexion.

En particulier, les informations d'identification associées à un objet connecté déterminé peuvent être, par exemple :
- le type d'interface de communication supportée par la passerelle de connexion pour sa connexion avec l'objet connecté concerné ;
- le nom de l'interface de communication supportée par la passerelle de connexion pour sa connexion avec l'objet connecté concerné ;
- l'adresse de l'objet connecté concerné sur l'interface de communication supportée par la passerelle de connexion ;
- l'identifiant universel unique UUID (de l'anglais « *Universal Unique Identifier*»), de l'objet connecté concerné ; et,
- une liste d'identifiants universels uniques d'autres objets connectés du réseau d'objet connecté, avec lesquels l'objet connecté concerné est apte à, de préférence configuré pour, se connecter.
Par exemple, en référence aux figures 1 et 2, l'objet connecté 103a est apte à, de préférence configuré pour, se connecter à l'objet connecté 102a tandis que l'objet connecté 103b est apte à, de préférence configuré pour, se connecter à l'objet connecté 108b.
De façon connue en soi de l'homme du métier, un UUID est un identifiant unique attribué à un objet connecté qui est généré par le fabriquant dudit objet connecté. La liste d'identifiants universels uniques comprend donc des UUID d'objets connectés auxquels l'objet connecté qui a répondu à la requête broadcast peut accéder.

Dans un second temps, la première passerelle 103 de connexion du réseau d'objets connectés local **transmet 202 à au moins une deuxième passerelle de connexion une liste d'identifiants uniques d'objets connectés avec lesquels les objets connectés locaux 103a, 103b sont susceptibles de communiquer.** Cette deuxième passerelle de connexion peut par exemple être une passerelle de connexion locale 102 ou distante 106. Cette liste d'identifiant peut par exemple comporter l'identifiant unique de l'objet connecté 108a auquel l'objet connecté 103b est susceptible de se connecter. De façon préférée, la transmission se fait par un message de type broadcast.

Suite au message transmit, la première passerelle de connexion peut **recevoir 203 une ou plusieurs réponses sous la forme d'un message de routage,** par exemple un premier message de routage, provenant de la ou des deuxièmes passerelles de connexion. Comme illustré dans la figure 2, le message de routage comporte une liste des identifiants d'objets connectés avec lesquels les objets locaux sont susceptibles de communiquer et pour lesquels elle possède un chemin de transmission (Rout_1). Par exemple, en référence à la figure 1, la première passerelle de connexion 103 peut recevoir de la passerelle de connexion 102 une liste de routage comportant l'UUID de l'objet connecté 102a avec des données sur le chemin de transmission telles que des informations d'identification et d'accessibilité. Ce message peut en particulier ne pas comporter d'UUID d'objets connectés n'étant pas connectés directement à la passerelle 102 car le message de routage doit être de préférence propagé entre les passerelles de connections.

Ainsi, la première passerelle de connexion peut **recevoir 204 une ou plusieurs réponses sous la forme d'un deuxième message de routage** provenant de la ou des deuxièmes passerelles de connexion. Comme illustré dans la figure 2, les deuxièmes messages de routage comporte une liste des identifiants d'objets connectés avec lesquels les objets locaux sont susceptibles de communiquer et pour lesquels la deuxième passerelle de connexion possède un chemin de transmission (Rout_1) ou (Rout_2). Par exemple, en référence à la figure 1, la première passerelle de connexion 103 peut recevoir de la passerelle de connexion 102 une liste de routage comportant l'UUID de l'objet connecté 108a avec des données sur le chemin de transmission (Rout_1) telles que des informations d'identification et d'accessibilité. La première passerelle de connexion 103 peut également recevoir de la passerelle de connexion 106 une liste de routage comportant l'UUID de l'objet connecté 108a avec des données sur le chemin de transmission (Rout_2) telles que des informations d'identification et d'accessibilité.

Sur la base de ces messages de routage, la première passerelle de connexion peut générer 205 la liste de routage peut également comprendre des informations d'identification et d'accessibilité respectivement associées à chaque autre passerelle de connexion du réseau d'objets connectés local et à au moins une autre passerelle d'un réseau d'objets connectés distant qui est accessible par cette passerelle de connexion. Avantageusement, une telle liste de routage contient toutes les informations utiles à la passerelle de connexion pour réaliser sa fonction de routage et notamment pour opérer une sélection entre plusieurs chemins de transmission possibles pour transmettre des données depuis un objet connecté source vers un objet connecté destinataire de l'infrastructure réseau globale. En outre, l'homme du métier appréciera que, dans la pratique, chaque passerelle de connexion d'un réseau d'objets connectés local peut exécuter le procédé en parallèle et ainsi maintenir à jour les informations utiles à ses fonctions de routage.

Par ailleurs, les informations d'identifications et d'accessibilité associées à une passerelle de connexion déterminée, qu'elle appartienne au réseau d'objets connectés local ou à un réseau d'objets connectés distant, peuvent être, par exemple :
- le type d'interface de communication supportée par la passerelle de connexion avec cette autre passerelle de connexion ;
- le nom de l'interface de communication supportée par la passerelle de connexion avec cette autre passerelle de connexion ;
- l'adresse de cette autre passerelle de connexion sur l'interface de communication supportée par la passerelle de connexion ;
- une liste d'UUID qui comprend :
   - les UUIDs d'objets connectés dits distants qui sont aptes à être directement connectés à la passerelle de connexion concernée ;
   - les UUIDs d'autres objets connectés distants avec lesquels les objets connectés directement connectés avec cette passerelle de connexion peuvent posséder une liaison de communication établie ; et,
   - les UUIDs, d'autres passerelles de connexion connectées à cette passerelle de connexion et qui peuvent transmettre des messages par son intermédiaire.

Dans un mode de mise en œuvre particulier du procédé, cette liste d'UUID peut être obtenue par une concaténation de toutes les données qu'elle contient, c'est-à-dire de tous les identifiants universels uniques qui sont compris dans ladite liste. Avantageusement, une telle concaténation permet de limiter la quantité de données transmises. En outre, s'agissant des UUIDs des passerelles de connexion qui peuvent transmettre des messages par l'intermédiaire de la passerelle de connexion concernée, ceux-ci permettent de former ledit maillage c'est-à-dire de relier entres elles plusieurs passerelles de connexion qui peuvent ensuite transférer un message d'un objet connecté directement connecté à une passerelle de connexion vers un objet connecté directement connecté à une autre passerelle de connexion.

L'homme du métier appréciera que les différentes informations qui sont comprises dans une liste de routage peuvent être récupérées régulièrement par la passerelle de connexion, par exemple, par l'intermédiaire de messages qui lui sont adressés. Ainsi, dans un exemple non-limitatif, la passerelle de connexion, a reçu, préalablement à l'exécution des étapes du procédé, en provenance d'objets connectés et/ou de passerelles de connexion locales ou distantes, des messages qui contiennent respectivement des informations d'identifications et des informations d'identification et d'accessibilité. En outre, de tels messages peuvent être reçus par la passerelle de connexion, par exemple, soit consécutivement à la diffusion d'une requête de type broadcast adressée à toutes les entités du réseau d'objets connectés local, soit consécutivement à l'émission d'une requête spécifiquement adressée à une passerelle de connexion déterminée, locale ou distante, comprise dans l'infrastructure réseau globale.

En outre, dans un mode de mise en œuvre particulier du procédé, chaque passerelle de connexion stocke une liste de routage dans une mémoire et met à jour cette liste à réception d'un message qui comprend des informations d'identification ou des informations d'identification et d'accessibilité en provenance soit d'un objet connecté ou soit d'une autre passerelle de connexion respectivement. Par exemple, une telle mise à jour a lieu à chaque réception d'un message contenant de telles informations par la passerelle de connexion. L'aspect dynamique du procédé découle alors de cette mise à jour régulière. Ainsi, à chaque itération du procédé, une liste stockée dans une mémoire de la passerelle de connexion peut intégrer, notamment, de nouveaux identifiants associés à de nouveaux objets connectés ou à de nouvelles passerelles de connexion qui les lui ont transmis.

En outre, le procédé peut comporter une **étape 206 suivante qui comporte la suppression des informations redondantes au sein de la liste de routage.** La suppression de l'étape 206 peut se faire sur la base d'un critère de performance déterminé et de manière à ne conserver qu'un exemplaire unique de chaque information comprise dans la liste de routage. Typiquement, un même objet connecté peut être identifié plusieurs fois dans une liste de routage. Dans ce cas, pour opérer le routage d'un message dont le destinataire est cet objet connecté, une passerelle de connexion a le choix entre plusieurs chemins de transmission. L'étape de suppression 206 permet ainsi de ne conserver qu'un seul chemin de transmission par destinataire potentiel. En outre, le critère de performance permet de ne conserver, dans la liste de routage, que les informations associées à un chemin de transmission considéré comme étant le chemin le plus approprié.

Par exemple, le critère de performance déterminé peut être basé sur une valeur associée à la latence d'une transmission de données (i.e. d'un message) de la passerelle de connexion à un objet connecté ou à une autre passerelle de connexion ou il peut être basé sur une valeur associée à la distance séparant la passerelle de connexion d'un objet connecté ou d'une autre passerelle de connexion. Ces critères de performances sont des exemples non-limitatifs et l'homme du métier appréciera que d'autres critères peuvent être utilisés, seuls ou en combinaison, pour ne conserver dans la liste de routage que les informations les plus pertinentes, c'est-à-dire les informations associées, par exemple, au chemin de transmission le plus rapide ou le plus stable.

Ainsi, dans un mode de mise en œuvre du procédé, les informations d'identifications associées à des objets connectés et les informations d'identification et d'accessibilité associées à des passerelles de connexion peuvent comprendre une valeur représentative de la latence associée à une transmission de données de la passerelle de connexion à cet objet connecté déterminé ou à cette passerelle de connexion déterminée, respectivement. De la même façon, dans un autre mode de mise en œuvre du procédé, les informations d'identifications associées à des objets connectés et les informations d'identification et d'accessibilité associées à des passerelles de connexion peuvent comprendre une valeur représentative de la distance qui sépare la passerelle de connexion qui exécute les étapes du procédé dudit objet connecté ou de ladite passerelle de connexion, respectivement. Une telle valeur peut, par exemple, correspondre au nombre de passerelles de connexion qui sépare la passerelle de connexion de l'objet connecté concerné ou de la passerelle de connexion concernée. En outre, pour un objet connecté identifié dans une liste de routage, la distance qui lui est associée peut-être égale à la distance de la passerelle de connexion avec laquelle il est directement connecté incrémentée d'une unité.

L'étape 207 suivante est exécutée à chaque réception par la passerelle de connexion d'un message à transmettre d'un objet connecté source à un objet connecté destinataire qui appartiennent tous deux au réseau d'objets connectés. Plus particulièrement, cette **étape 207 comporte la sélection d'un chemin de transmission du message à transmettre** sur la base de la liste de routage générée et éventuellement modifiée par la passerelle de connexion lors des étapes précédentes.

En d'autres termes, lorsque la passerelle reconnaît l'identifiant d'un objet connecté auquel est destiné un message, elle peut, grâce à sa liste de routage dans laquelle figure cet identifiant, sélectionner le chemin de transmission le plus adapté pour transmettre le message au regard des critères de performances utilisés. En outre, dans un autre mode de mise en œuvre du procédé, ledit procédé comprend aussi une étape d'envoi du message à transmettre.

Concrètement, un objet connecté émet une requête vers une passerelle de connexion déterminée pour envoyer un message à un autre objet connecté dont il connait un identifiant. Cette passerelle de connexion utilise ensuite le chemin de transmission sélectionné pour transmettre ledit message.

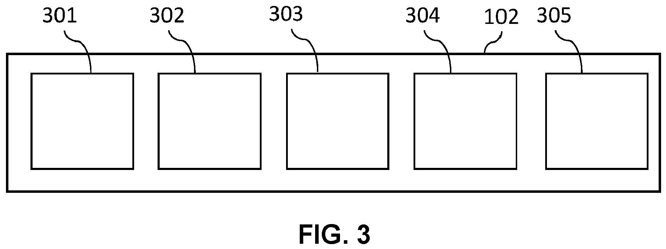

En référence à la **figure 3**, il va maintenant être décrit un schéma fonctionnel illustrant un mode de réalisation d'une passerelle de connexion selon un autre aspect de l'invention. La passerelle est particulièrement adaptée pour effectuer la mise en œuvre du procédé qui a été décrit dans ce qui précède. Dans l'exemple représenté, la passerelle de connexion 102 comporte ainsi un module de communication 301, un module de génération 302, un module de suppression 303 et un module de sélection 304. Chaque module utilise des moyens qui peuvent être des combinaisons de processeurs, mémoire vive, mémoire morte, mémoire cache, ainsi que les codes (logiciels) supportant des instructions pour opérer ces éléments matériels.

Le module de communication 301 est avantageusement configuré pour permettre à la passerelle de connexion 102 de transmettre à une deuxième passerelle de connexion, une liste d'identifiants uniques d'objets connectés avec lesquels les objets connectés locaux sont susceptibles de communiquer, et recevoir un premier message de routage provenant de la deuxième passerelle de connexion, ledit message de routage comportant une liste des identifiants d'objets connectés avec lesquels les objets locaux sont susceptibles de communiquer et pour lesquels elle possède un chemin de transmission

Le module de génération 302 est avantageusement configuré pour permettre à la passerelle de connexion 102 de générer une liste de routage qui comprend des informations d'identification associées à des objets connectés et des informations d'identification et d'accessibilité associées à des passerelles de connexion.

Le module de suppression 303 est quant à lui configuré pour supprimer des informations d'identification et/ou des informations d'identification et d'accessibilité redondantes au sein de la liste de routage de manière à ne conserver qu'un exemplaire unique de chacune desdites informations dans la liste de routage. En particulier, le module de suppression 303 est configuré pour opérer cette suppression sur la base d'un critère de performance déterminé. Ce critère pouvant être, par exemple, basé sur un paramètre tel que la latence associée à une transmission ou la distance séparant deux entités au sein d'un infrastructure réseau.

Enfin, le module de sélection 304 est configuré pour sélectionner un chemin de transmission lorsque la passerelle de connexion 102 reçoit un message à transmettre d'un objet connecté source à un objet connecté destinataire appartenant tous deux à une infrastructure réseau formée par au moins le réseau d'objets connectés auquel appartient la passerelle de connexion et au moins un autre réseau d'objets connectés auquel il est interconnecté par l'intermédiaire d'un réseau de transport de données.

En outre, la liste de routage peut être mémorisée par un module de mémorisation 305. Pour cela, le module de mémorisation peut comprendre n'importe quel support lisible connu dans l'art comprenant, par exemple, une mémoire volatile, telle qu'une mémoire vive statique (SRAM) et une mémoire vive dynamique (DRAM), et/ou une mémoire non volatile, telle que mémoire morte, mémoires flash, disques durs, disques optiques et bandes magnétiques ou sous la forme d'une mémoire volatile, telle qu'une mémoire vive (RAM) et/ou une mémoire cache.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Comme cela a été décrit, la présente invention propose des solutions permettant un routage optimisé, en ce sens que chaque passerelle de connexion peut sélectionner intelligemment le chemin de transmission le plus approprié pour transmettre un message lorsque plusieurs chemins de transmissions sont disponibles. A cet effet, l'invention permet à une passerelle de connexion comprise dans une infrastructure réseau, formée par au moins deux réseaux d'objets connectés et un réseau de transport de données qui les interconnecte, de s'appuyer sur une liste de routage établie grâce à des critères de performances déterminés pour réaliser la sélection du chemin de transmission, et ce même lorsque le routage doit s'opérer entre passerelles de connexion utilisant des interfaces de communication différentes.

## Revendications

1. Procédé de routage dynamique dans des réseaux interconnectés d'objets connectés, chaque réseau d'objets connectés (101,107) comprenant au moins une passerelle de connexion (102,103,108) à au moins un réseau de transport de données (104), lesdits réseaux d'objets connectés étant interconnectés par l'intermédiaire dudit réseau de transport de données, ledit procédé comprenant les étapes suivantes, exécutées par une première passerelle de connexion d'un réseau d'objets connectés local :
- une transmission (202), par la première passerelle de connexion, à une deuxième passerelle de connexion, d'une liste d'identifiants uniques d'objets connectés avec lesquels les objets connectés locaux sont susceptibles de communiquer,
- une réception (203), par la première passerelle de connexion, d'un premier message de routage provenant de la deuxième passerelle de connexion, ledit premier message de routage comportant une liste des identifiants d'objets connectés avec lesquels les objets locaux sont susceptibles de communiquer et pour lesquels la deuxième passerelle de connexion possède un chemin de transmission,
- une génération (205) d'une liste de routage comprenant des informations d'identification respectivement associées à des objets connectés locaux connectés à la première passerelle (103) de connexion et des informations d'identification et d'accessibilité respectivement associées à au moins une deuxième passerelle de connexion du réseau d'objets connectés local (102) et/ou d'un réseau d'objets connectés distant (108) accessible par ladite première passerelle de connexion ;
et, lors de la réception par la première passerelle de connexion d'un message à transmettre d'un objet connecté source à un objet connecté destinataire :
- une sélection (207) d'un chemin de transmission du message à transmettre sur la base des informations d'identification et/ou des information d'identification et d'accessibilité comprises dans la liste de routage.

2. Procédé de routage selon la revendication 1, **caractérisé en ce que** la première passerelle envoie une liste concaténée des identifiants des objets connectés avec lesquels les objets locaux sont susceptibles de communiquer, et la deuxième passerelle, distante ou locale, retourne un sous-ensemble contenant les identifiants pour lesquels elle possède un routage.

3. Procédé de routage selon l'une des revendications 1 ou 2, **caractérisé en ce qu'**il comporte une étape de propagation de la liste d'identifiants uniques d'objets connectés avec lesquels les objets connectés locaux sont susceptibles de communiquer de passerelle en passerelle.

4. Procédé de routage selon l'une quelconque des revendications 1 à 3, **caractérisé en ce que** le premier message de routage provenant de la deuxième passerelle de connexion, comporte une liste des identifiants d'objets connectés directement connectés à la deuxième passerelle de connexion et **en ce que** le procédé comporte une étape de réception (204) par la première passerelle de connexion d'un deuxième message de routage provenant de la deuxième passerelle de connexion, ledit deuxième message de routage comportant une liste des identifiants d'objets connectés avec lesquels les objets locaux sont susceptibles de communiquer et pour lesquels elle possède un chemin de transmission mettant en œuvre une autre passerelle de connexion distante.

5. Procédé de routage selon l'une quelconque des revendications 1 à 4, **caractérisé en ce que** le message de routage comporte en particulier, une liste d'identifiants universels uniques, UUID, comprenant des UUID d'objets connectés locaux associés à :
- des UUID d'objets connectés distants directement connectés à la deuxième passerelle de connexion ;
- des UUID d'objets connectés distants connectés à la deuxième passerelle de connexion par l'intermédiaire d'autres passerelles de connexion ; ou
- des UUID d'objets connectés distants avec lesquels les objets connectés directement connectés avec la deuxième passerelle de connexion sont aptes à établir une liaison de communication.

6. Procédé de routage selon l'une quelconque des revendications 1 à 5, **caractérisé en ce qu'**il comporte une étape de suppression (206), sur la base d'un critère de performance déterminé, d'informations d'identification et/ou d'information d'identification et d'accessibilité redondantes au sein de la liste de routage de manière à ne conserver qu'un exemplaire unique de chacune desdites informations dans la liste de routage.

7. Procédé selon l'une quelconque des revendications 1 à 6, dans lequel les informations d'identification et d'accessibilité associées à une seconde passerelle de connexion déterminée du réseau d'objets connectés local ou d'un réseau d'objets connectés distant accessible comprennent une ou plusieurs des informations suivantes :
- le type d'interface de communication supportée par la première passerelle de connexion pour la connexion avec ladite seconde passerelle de connexion ;
- le nom de l'interface de communication supportée par la première passerelle de connexion pour la connexion avec ladite seconde passerelle de connexion ;
- l'adresse de ladite passerelle de connexion sur l'interface de communication supportée par la première passerelle de connexion pour la connexion avec ladite seconde passerelle de connexion ;
- une liste d'identifiants universels uniques.

8. Procédé selon la revendication 7, dans lequel la liste d'identifiants universels uniques est obtenue par concaténation de tous les identifiants universels uniques compris dans ladite liste.

9. Procédé selon l'une quelconque des revendications 1 à 8, dans lequel les passerelles de connexion supportent des interfaces de communication respectives et les interfaces de communication utilisées par les passerelles de connexion comprennent des interfaces Ethernet, des interfaces WIFI, des interfaces Bluetooth, des interfaces RF433 ou des interfaces IrDA.

10. Procédé selon l'une quelconque des revendications 1 à 9, dans lequel le critère de performance déterminé est basé sur un ou plusieurs des paramètres suivants :
- la latence associée à une transmission de données de la première passerelle de connexion à un objet connecté ou à une autre passerelle de connexion ; et,
- la distance séparant la première passerelle de connexion d'un objet connecté ou d'une autre passerelle de connexion.

11. Procédé selon l'une quelconque des revendications 1 à 10, dans lequel les informations d'identifications associées à un objet connecté et les informations d'identification et d'accessibilité associées à une passerelle de connexion comprennent en outre une valeur représentative de la latence associée à une transmission de données de la première passerelle de connexion audit objet connecté ou à ladite passerelle de connexion, respectivement.

12. Procédé selon l'une quelconque des revendications 1 à 11, dans lequel les informations d'identifications associées à un objet connecté et les informations d'identification et d'accessibilité associées à une passerelle de connexion comprennent en outre une valeur représentative de la distance séparant la première passerelle de connexion dudit objet connecté ou de ladite passerelle de connexion, respectivement.

13. Procédé selon l'une quelconque des revendications 1 à 12, dans lequel la liste de routage est stockée dans une mémoire de la première passerelle de connexion et mise à jour à réception, par la première passerelle de connexion, d'un message comprenant des informations d'identification ou des informations d'identification et d'accessibilité en provenance d'un objet connecté ou d'une autre passerelle de connexion, respectivement.

14. Passerelle de connexion d'un réseau d'objets connectés, ledit réseau d'objets connectés étant interconnecté à un autre réseau d'objets connectés par l'intermédiaire d'au moins un réseau de transport de données et comprenant des passerelles de connexion supportant des interfaces de communication respectives, ladite passerelle de connexion étant **caractérisée en ce qu'**elle comporte :
- un module de communication (301) configuré pour transmettre à une deuxième passerelle de connexion, une liste d'identifiants uniques d'objets connectés avec lesquels les objets connectés locaux sont susceptibles de communiquer, et recevoir un premier message de routage provenant de la deuxième passerelle de connexion, ledit message de routage comportant une liste des identifiants d'objets connectés avec lesquels les objets connectés locaux sont susceptibles de communiquer et pour lesquels elle possède un chemin de transmission ;
- un module (302) de génération configuré pour permettre à la passerelle de connexion de générer une liste de routage qui comprend des informations d'identification associées à des objets connectés et des informations d'identification et d'accessibilité associées à des passerelles de connexion ;
- un module (303) de suppression configuré pour supprimer des informations d'identification et/ou des informations d'identification et d'accessibilité redondantes au sein de la liste de routage de manière à ne conserver qu'un exemplaire unique de chacune desdites informations dans la liste de routage ; et,
- un module (304) de sélection configuré pour sélectionner un chemin de transmission lorsque la passerelle de connexion reçoit un message à transmettre d'un objet connecté source à un objet connecté destinataire du réseau d'objets connectés, ladite sélection étant réalisée sur la base de la liste de routage.

15. Système de communication de données comprenant au moins deux réseaux d'objets connectés (101,107) interconnectés par l'intermédiaire d'un réseau de transport de données (104), lesdits réseaux d'objets connectés (101,107) comprenant une pluralité de passerelles de connexion (102,103,108) supportant des interfaces de communication respectives, dans lequel chaque passerelle de connexion (102,103,108) est configurée :
- pour transmettre à une première passerelle de connexion des messages de routage comportant une liste des identifiants d'objets connectés avec lesquels les objets connectés locaux de la première passerelle de connexion sont susceptibles de communiquer et pour lesquels elle possède un chemin de transmission,
- pour générer une liste de routage qui comprend des informations d'identification associées à des objets connectés et des informations d'identification et d'accessibilité associées à des passerelles de connexion, et
- pour sélectionner, sur la base de la liste de routage, un chemin de transmission lorsque la passerelle de connexion reçoit un message à transmettre d'un objet connecté source à un objet connecté destinataire du réseau d'objets connectés.
